# FASCICULE DE BREVET EUROPEEN

(11) **EP 3 354 831 B1**
(45) Date de publication et mention de la délivrance du brevet: **20.11.2019**
(21) Numéro de dépôt: 18153286.2
(22) Date de dépôt: 24.01.2018
(51) Int. Cl.: E05F 1/10, B60R 9/06, B60R 11/00, B60P 1/44

(54) **COFFRE POUR LE TRANSPORT ET LE DÉBARQUEMENT DE ROBOT**
GEHÄUSE FÜR DEN TRANSPORT UND DAS AUSSCHIFFEN EINES ROBOTERS
BOX FOR TRANSPORTING AND DISEMBARKING A ROBOT

(30) Priorité: 26.01.2017 FR 1700078
(43) Date de publication de la demande: 01.08.2018
(73) Titulaire: NEXTER Systems, 42328 Roanne Cedex (FR)
(72) Inventeur: BERTRAND, Ludovic, 18023 BOURGES (FR); COGEZ, Didier, 18023 BOURGES (FR)
(74) Mandataire: Cabinet Chaillot

(56) Documents cités:
- US-A- 4 268 209
- US-A- 4 392 771
- US-A- 6 021 606
- US-B1- 7 896 113

## Description

Le domaine technique de l'invention est celui des coffres de transport et de débarquement pour robots terrestres transportés par des véhicules.

Le brevet US7896113 divulgue un tel coffre comportant un dormant solidaire de l'avant d'un véhicule et un battant apte à pivoter jusque dans une position ouverte de manière à servir de rampe de débarquement pour un robot solidarisable à une face interne du battant.

Un actionneur comportant un treuil permet l'abaissement et le relèvement du battant.

Selon l'endroit où le coffre sera ouvert, la prise de contact du battant avec le sol se fera avec une variation de hauteur due à l'état de surface ou bien aux irrégularités du sol. Ceci implique que l'angle d'ouverture du battant pourra également varier, par exemple si un obstacle tel qu'une pierre se trouve ou non à cet endroit, cela empêchera ou non la pleine ouverture du battant.

Le brevet US4268209 décrit un coffre de transport pour véhicule terrestre qui peut pivoter par l'action de deux vérins pour permettre l'embarquement ou le débarquement d'un véhicule de service. Ce brevet divulgue les caractéristiques du préambule de la revendication 1.

On connait enfin par le brevet US4392771 un dispositif de déploiement d'une plateforme qui permet l'accès à un véhicule pour un fauteuil d'handicapé. La plateforme après son basculement est horizontale et descend verticalement. Elle forme un ascenseur. Ce dispositif comporte des moyens permettant de détecter un choc lors de l'abaissement de la rampe, moyens dans lesquels un interrupteur est actionné permettant d'arrêter le mouvement d'ouverture.

Un coffre selon l'art antérieur a comme inconvénient majeur qu'il impose à un opérateur commandant l'ouverture du battant de devoir contrôler l'ouverture pour arrêter celle-ci juste au bon moment au risque de voir le treuil se dévider inutilement.

L'invention vise à rendre l'ouverture d'un tel coffre plus fiable et plus simple en ne requérant plus l'attention d'un opérateur pour arrêter l'ouverture au moment idoine.

L'invention porte sur un coffre destiné au transport et au débarquement d'au moins un robot, coffre comportant un dormant destiné à être solidaire d'un véhicule et articulé par rapport à un battant autour d'une charnière sensiblement horizontale, battant pouvant être mis dans une position dite fermée lorsqu'il obture le dormant et une position dite ouverte afin qu'un panneau qui le constitue serve de rampe de débarquement au robot, le coffre comportant en outre au moins un actionneur rigide, qui a une longueur ou un débattement fixe lorsqu'il est déployé et lorsqu'il est replié, solidaire du dormant par une première extrémité et solidaire du battant par une seconde extrémité, au moins une des extrémités comportant un axe de pivot sensiblement horizontal traversant un trou d'une partie du coffre à laquelle est solidarisée l'extrémité concernée de l'actionneur, le coffre étant caractérisé par le fait que ledit trou est oblong et par le fait que le battant porte le trou oblong qui est orienté horizontalement quand le battant est fermé et sensiblement verticalement quand le battant est ouvert, le trou oblong assurant ainsi le maintien du battant quand il est en position fermée et donnant un degré de liberté en pivotement du battant quand il est en position ouverte.

Avantageusement, l'actionneur rigide comporte au moins un vérin linéaire.

Avantageusement, le trou oblong a une longueur permettant une variation angulaire du battant d'au moins 10 degrés lorsque le vérin est déployé.

L'invention sera mieux comprise à la lecture de la description suivante, description faite à la lumière des dessins annexés, dessins dans lesquels:
La figure 1 représente une vue de trois quarts d'un véhicule équipé d'un coffre selon l'invention et débarquant des robots.
La figure 2 représente une vue en coupe latérale d'un coffre selon un mode de réalisation de l'invention en position fermée.
La figure 3 représente une vue en coupe latérale du coffre selon ce mode de réalisation de l'invention en position ouverte basse.
La figure 4 représente une vue en coupe latérale du coffre selon ce mode de réalisation de l'invention en position ouverte et en contact avec un obstacle.

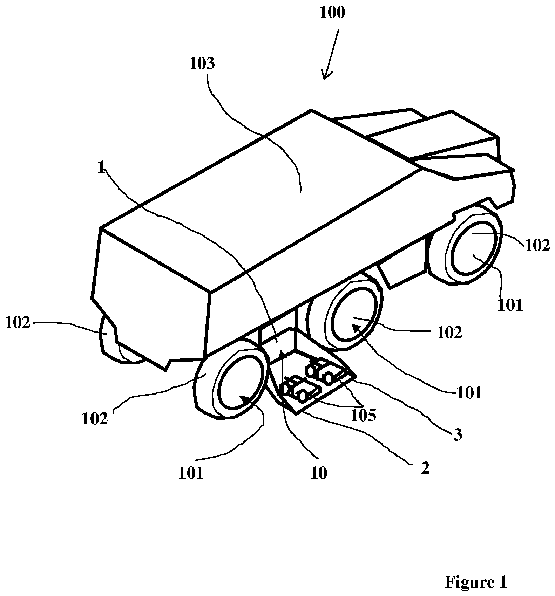

Selon la figure 1, un véhicule militaire 100 comporte plusieurs essieux 101. Chaque essieu 101 comporte une paire de roues 102. Chaque roue 102 de l'essieu 101 central et de l'essieu 101 arrière est surplombée par une partie d'une cabine 103. Le volume situé sous la cabine 103 et entre l'essieu central 101 et l'essieu arrière 101 est occupé par un coffre 10 selon l'invention.

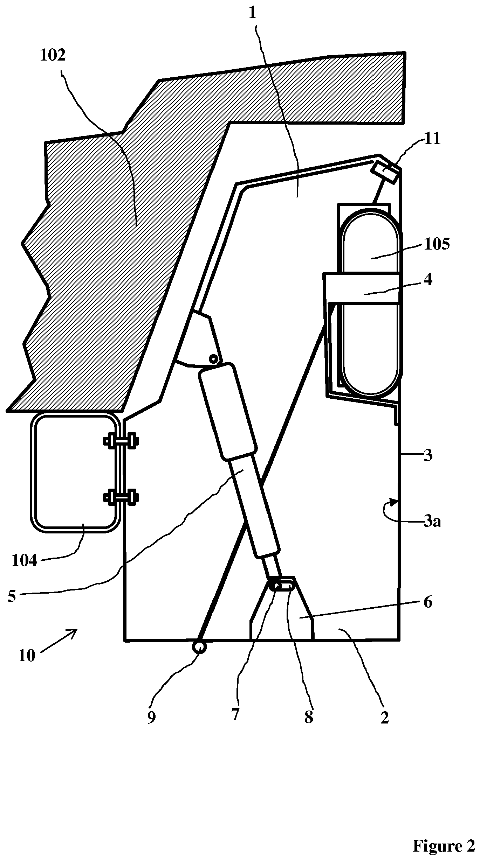

Le coffre 10 est solidaire d'un longeron 104 (longeron visible à la figure 2) du véhicule 100 au niveau d'un dormant 1 du coffre 10, par boulonnage par exemple. Le coffre 10 comporte un battant 2 représenté sur la figure 1 en position ouverte vers le bas et une pluralité de robots 105 sont disposés sur une face 3a interne d'un panneau 3 du battant 2. Le panneau 3 joue le rôle de rampe 3 de débarquement ou d'embarquement pour les robots 105.

Selon la figure 2, le battant 2 est relevé et obture le dormant 1 du coffre 10. Dans cette position dite fermée, la rampe 3 est sensiblement verticale et les robots 105 sont solidaires de la face interne 3a de la rampe 3 au moyen de brides 4 formant des logements au fond desquels les robots 105 sont maintenus par gravité. Le battant 2 est maintenu en position fermée par un actionneur 5 rigide reliant le battant 2 au dormant 1. On entend par actionneur rigide un actionneur qui a une longueur ou un débattement fixe lorsqu'il est déployé et lorsqu'il est replié. Ceci est entendu par opposition à un actionneur souple tel qu'un ressort.

En l'espèce, l'actionneur rigide 5 est constitué ici par un vérin linéaire 5 dont une première extrémité est solidaire du dormant 1 et une seconde extrémité est solidaire d'une partie 6 (ici une patte 6) du battant 2 par une liaison pivot 7 située dans un trou oblong 8 de la patte 6 du battant 2. Le vérin 5 sera avantageusement un vérin 5 à commande électrique.

Le trou oblong 8 est orienté longitudinalement selon une direction sensiblement horizontale. De cette manière, le trou oblong 8 n'offre pas de degré de liberté vertical à la liaison pivot 7 qui maintient le battant 2 en position fermée lorsque le vérin 5 est rétracté.

Pour plus de sécurité, un verrou 11 pourra être ajouté afin de bloquer le coffre 10 en position fermée, ce qui permet d'arrêter la sollicitation en rétractation du vérin 5 (donc réduit la consommation d'énergie) et sécurise le coffre 10 contre les effractions. Le verrou 11 pourra être commandable à distance depuis un poste de commande (poste non représenté) situé à bord du véhicule.

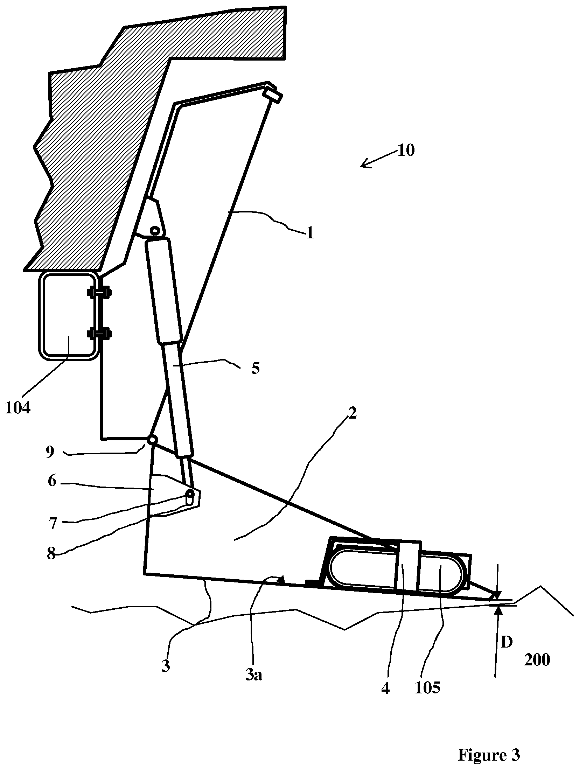

Selon la figure 3, le battant 2 est en position ouverte suite au déploiement complet du vérin 5. Le battant 2 a pivoté par rapport au dormant 1 autour d'une charnière 9 horizontale située vers le bas du dormant 1 du coffre 10 et qui relie le battant 2 et le dormant 1. Le panneau 3 du battant 2 est alors situé au voisinage du sol et son bord orienté vers l'extérieur du véhicule est à une distance D du sol 200 compatible du débarquement des robots 105.

Dans cette position, le mouvement d'ouverture vers le bas du battant 2 est arrêté par l'interférence du pivot 7 avec une extrémité du trou oblong 8 située vers le haut relativement à l'orientation du trou oblong 8 qui se trouve quant à lui orienté sensiblement verticalement consécutivement à l'ouverture du battant 2.

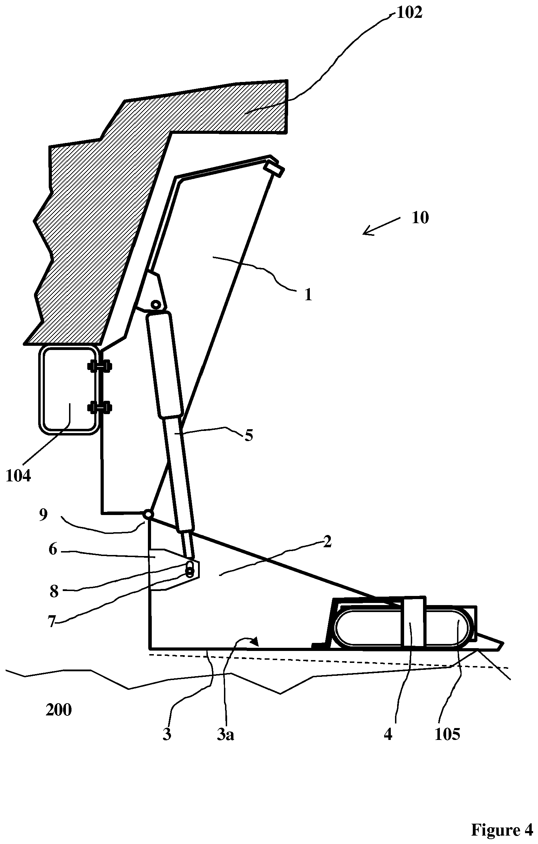

Selon la figure 4, le battant 2 est en position ouverte mais le panneau 3 formant rampe de débarquement repose sur le sol 200. Le vérin 5 est pleinement déployé mais la liaison pivot 7 est dans une position intermédiaire entre les extrémités du trou oblong 8. On voit donc que le positionnement sensiblement vertical du trou oblong 8 offre un degré de liberté en translation de la liaison pivot 7 dans le trou oblong 8 et par là même un degré de liberté en pivotement du battant 2 qui est moins ouvert qu'à la situation décrite à la figure précédente dont la position angulaire est représentée en traits pointillés .

L'Homme du Métier pourra choisir un débattement libre autorisé du battant 2 de l'ordre de 10 degrés par exemple.

Dans ces conditions les robots 105 peuvent débarquer.

L'invention permet donc une ouverture du battant 10 satisfaisante pour le débarquement ou l'embarquement de robots 105 indépendamment de la position finale de déploiement de l'actionneur 5 évitant ainsi la mise en place d'une surveillance du déploiement de l'actionneur.

A titre de variante, il serait possible d'adopter un vérin rotatif positionné au niveau de la charnière 9 entre dormant et battant. Dans ce cas l'extrémité pivotante du vérin rotatif portera une liaison pivot qui coopérera encore avec une lumière 8 solidaire d'une patte portée par le battant.

On voit donc que l'invention ne nécessite aucun contrôle d'arrêt en position lors du déploiement de l'actionneur 5 pour ouvrir le coffre 10 de manière à permettre le débarquement des robots 105.

L'Homme du métier choisira la longueur du trou oblong 8 notamment en fonction du degré de liberté angulaire qu'il souhaite donner au panneau 3 lorsque le battant 2 est en position ouverte, cette liberté nécessaire étant estimée en fonction des irrégularités du terrain sur lequel le coffre 10 sera éventuellement ouvert.

## Revendications

1. Coffre (10) destiné au transport et au débarquement d'au moins un robot (105), coffre (10) comportant un dormant (1) destiné à être solidaire d'un véhicule (100) et articulé par rapport à un battant (2) du coffre (10) autour d'une charnière (9) sensiblement horizontale, battant (2) pouvant être mis dans une position dite fermée lorsqu'il obture le dormant (1) et une position dite ouverte afin qu'un panneau (3) qui le constitue serve de rampe (3) de débarquement au robot (105), le coffre (10) comportant en outre au moins un actionneur (5) rigide, qui a une longueur ou un débattement fixe lorsqu'il est déployé et lorsqu'il est replié, solidaire du dormant (1) par une première extrémité et solidaire du battant (2) par une seconde extrémité, au moins une des extrémités comportant un axe de pivot (7) sensiblement horizontal lorsque le coffre (10) est monté sur le véhicule, traversant un trou (8) d'une partie du coffre (10) à laquelle est solidarisée l'extrémité concernée de l'actionneur (5), le coffre (10) étant **caractérisé par le fait que** ledit trou (8) est oblong et **par le fait que** le battant (2) porte le trou oblong (8) qui est orienté horizontalement quand le battant (2) est fermé et sensiblement verticalement quand le battant (2) est ouvert, le trou oblong (8) assurant ainsi le maintien du battant (2) quand il est en position fermée et donnant un degré de liberté en pivotement du battant (2) quand il est en position ouverte.

2. Coffre (10) selon la revendication 1, **caractérisé en ce que** l'actionneur (5) rigide comporte au moins un vérin (5) linéaire.

3. Coffre (10) selon une des revendications précédentes, **caractérisé en ce que** le trou oblong (8) a une longueur permettant une variation angulaire du battant (2) d'au moins 10 degrés lorsque le vérin (5) est déployé.

## Patentansprüche

1. Gehäuse (10) für das Transportieren und Entladen mindestens eines Roboters (105), wobei das Gehäuse (10) aufweist: eine Einfassung (1), die zur Befestigung an einem Fahrzeug (100) bestimmt ist und in Bezug auf einen Türflügel (2) des Gehäuses (10) um ein im Wesentlichen horizontales Scharnier (9) schwenkbar ist, wobei der Türflügel (2) in eine sogenannte geschlossene Position gebracht werden kann, wenn er die Einfassung (1) schließt, und in eine sogenannte offene Position, so dass eine Platte (3), die er ausbildet, als Rampe (3) zum Entladen des Roboters (105) dient, wobei das Gehäuse (10) ferner mindestens ein starres Stellglied (5) umfasst, das im ausgefahrenen und eingeklappten Zustand eine feste Länge oder einen festen Hub aufweist, und das mit einem ersten Ende an der Einfassung (1) und mit einem zweiten Ende an dem Türflügel (2) befestigt ist, wobei mindestens eines der Enden eine Drehachse (7) aufweist, die, wenn das Gehäuse (10) an dem Fahrzeug montiert ist, im Wesentlichen horizontal ist, und ein Loch (8) in einem Teil des Gehäuses (10) an dem das entsprechende Ende des Stellglieds (5) befestigt ist, durchquert, wobei das Gehäuse (10) **dadurch gekennzeichnet ist, dass** das Loch (8) länglich ist, und dadurch, dass der Türflügel (2) das Langloch (8) trägt, das horizontal ausgerichtet ist, wenn der Türflügel (2) geschlossen ist, und im Wesentlichen vertikal, wenn der Türflügel (2) geöffnet ist, wobei das Langloch (8) somit die Wartung des Türflügel (2) in geschlossener Position gewährleistet und einen Freiheitsgrad beim Schwenken des Türflügel (2) in offener Position bietet.

2. Gehäuse (10) nach Anspruch 1, **dadurch gekennzeichnet, dass** das starre Stellglied (5) mindestens einen Linearzylinder (5) umfasst.

3. Gehäuse (10) nach einem der vorstehenden Ansprüche, **dadurch gekennzeichnet, dass** das Langloch (8) eine Länge aufweist, die eine Winkelvariation des Türflügels (2) von mindestens 10 Grad ermöglicht, wenn der Zylinder (5) ausgefahren ist.

## Claims

1. A box (10) for transporting and disembarking at least one robot (105), the box (10) comprising a frame (1) intended to be secured to a vehicle (100) and hinged with respect to a leaf (2) of the box (10) around a substantially horizontal hinge (9), wherein the leaf (2) can be placed in a so-called closed position when it closes the frame (1) and a so-called open position such that a panel (3) constituting it acts as a ramp (3) for disembarking the robot (105), the box (10) further comprising at least one rigid actuator (5), which has a fixed travel or length when it is extended and when it is folded, that is secured to the frame (1) at a first end and secured to the leaf (2) at a second end, at least one of the ends comprising a pivot pin (7) that is substantially horizontal when the box (10) is mounted on the vehicle, passing through a hole (8) of one portion of the box (10) to which said end of the actuator (5) is secured, the box (10) being **characterised in that** said hole (8) is oblong and **in that** the leaf (2) carries the oblong hole (8) that is oriented horizontally when the leaf (2) is closed and substantially vertically when the leaf (2) is opened, the oblong hole (8) thus ensuring that the leaf (2) is held when it is in closed position and providing to the leaf (2) a pivoting degree of freedom when it is in open position.

2. The box (10) according to claim 1, **characterised in that** the rigid actuator (5) has at least one linear cylinder (5).

3. The box (10) according to one of the preceding claims, **characterised in that** the oblong hole (8) has a length allowing an angular variation of the leaf (2) of at least 10 degrees when the cylinder (5) is extended.
